# EUROPÄISCHE PATENTSCHRIFT

(11) **EP 2 778 688 B1**
(45) Veröffentlichungstag und Bekanntmachung des Hinweises auf die Patenterteilung: **30.10.2019**
(21) Anmeldenummer: 13158896.4
(22) Anmeldetag: 13.03.2013
(51) Int. Cl.: G01N 35/10, B01L 3/00

(54) **Haltevorrichtung für eine Pipettiernadel**
Holding device for a pipetting needle
Dispositif de retenue pour une aiguille de prélèvement par pipette

(43) Veröffentlichungstag der Anmeldung: 17.09.2014
(73) Patentinhaber: Siemens Healthcare Diagnostics Products GmbH, 35041 Marburg (DE)
(72) Erfinder: Wilmes, Hugo, 65812 Bad Soden (DE)

(56) Entgegenhaltungen:
- WO-A1-2010/082080
- US-A1- 2004 054 286
- US-A1- 2007 053 797
- US-A1- 2007 095 159
- US-A1- 2012 100 047

## Beschreibung

Die Erfindung betrifft eine Haltevorrichtung für eine Hohlnadel zum Durchstoßen des Deckels eines Probenröhrchens in einem automatischen Analysegerät.

Zahlreiche Nachweis- und Analyseverfahren zur Bestimmung physiologischer Parameter in Körperflüssigkeitsproben oder anderer biologischer Proben werden heute automatisiert in großer Anzahl in automatischen Analysegeräten, auch sogenannten in vitro-Diagnostiksystemen, durchgeführt.

Um eine Vielzahl von Untersuchungen automatisiert durchführen zu können, sind diverse Vorrichtungen zum räumlichen Transfer von Probenbehältern, Reaktionsbehältern und Reagenzbehältern erforderlich, wie z.B. Transferarme mit Greiffunktion, Transportbänder oder drehbare Transporträder. Weiterhin sind Pipettiervorrichtungen zum Transfer von Flüssigkeiten vorgesehen. Die Analysegeräte umfassen ferner eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Messsysteme beruhen auf optischen Methoden. Diese Verfahren ermöglichen den qualitativen und quantitativen Nachweis von Analyten in flüssigen Proben. Die Bestimmung klinisch relevanter Parameter, wie zum Beispiel der Konzentration oder der Aktivität eines Analyten, erfolgt vielfach, indem ein Teil einer Körperflüssigkeit eines Patienten, z.B. Blut, Plasma, Serum oder Urin, mit einem oder mehreren Testreagenzien in einem Reaktionsgefäß vermischt wird, wodurch eine biochemische Reaktion in Gang gesetzt wird, die eine messbare Veränderung einer optischen oder anderen physikalischen Eigenschaft des Testansatzes bewirkt.

Die Proben werden dem Gerät üblicherweise in Probengefäßen, wie z.B. Blutentnahmeröhrchen zugeführt. Blutentnahmeröhrchen sind üblicherweise aus transparentem Kunststoff gefertigt und sind an der Spitze mit einem speziellen Anschluss für Kanülen ausgestattet. Blutentnahmeröhrchen sind (außer beim so genannten Sarstedt-Prinzip) häufig als Unterdrucksysteme ausgestaltet, d.h.innerhalb des Probengefäßes herrscht von vornherein ein Unterdruck. Wird es auf den mit der Punktionskanüle verbundenen Adapter gesteckt, wird durch diesen Unterdruck das Blut angesaugt. Ein Vorteil dieses Systems ist, dass die angesaugte Blutmenge vergleichsweise konstant ist und somit auch die Menge eines vorab in das Blutentnahmeröhrchen eingebrachten Gerinnungshemmers (z.B. Citrat, EDTA, Heparin) genau bemessen werden kann. Die Blutentnahmeröhrchen sind üblicherweise zur Erhaltung des Drucks mit einem elastischen Verschluss abgedichtet.

Um eine Untersuchung automatisiert durchführen zu können, ist es erforderlich, ein Aliquot der Blutprobe aus dem Blutentnahmeröhrchen zu entnehmen und in das für die jeweilige Untersuchung bestimmte Reaktionsgefäß zu transferieren. Hierzu sind Pipettiervorrichtungen in dem Analysegerät vorgesehen. Übliche Pipettiervorrichtungen umfassen eine mittels einer Haltevorrichtung befestigte Hohlnadel, die durch Druck oder Unterdruck betrieben definierte Probenmengen entnehmen und abgeben kann. Derartige Nadeln haben eine im Wesentlichen zylinderförmige Grundform mit einem zentralen Hohlkanal, wobei die Hohlnadel axiale Abschnitte mit variierenden Innen- und Außenradien aufweisen kann. Als Grundfläche des Zylinders wird dabei üblicherweise ein Kreis gewählt, andere Grundformen sind jedoch möglich. Die Spitze der Nadel ist üblicherweise konisch ausgeformt oder, wenn sie dazu vorgesehen ist, den Deckel von verschlossenen Blutentnahmeröhrchen oder anderen Flüssigkeitsbehältnissen zu durchstoßen, schräg angespitzt.

Zur Entnahme von Probenflüssigkeit aus einem Probenbehälter wird die Hohlnadel entlang der Mittelachse des Probenröhrchens eingeführt, durchsticht den elastischen Verschlussstopfen und wird so in die Probenflüssigkeit eingetaucht. Das Eintauchen wird üblicherweise mittels eines entsprechenden Sensors registriert und die vorgegebene Menge druckluftgesteuert eingesaugt.

Da die Hohlnadel vergleichsweise massiv ausgeführt ist und die elastischen Stopfen von Probenröhrchen aus festem Gummi mit einer Dicke von bis zu 1 cm gefertigt sind, ist eine relativ hohe Kraft zum Durchstoßen eines Verschlussstopfens notwendig. Hier kann es durch eine Verschiebung der Nadel zu Fehlern bei der Probenaufnahme und zu entsprechenden Folgefehlern in der Probenauswertung kommen. Weiterhin kommt es im Verlauf vieler Durchstoßvorgänge zu einer Abnutzung der Nadel, so dass die Hohlnadel regelmäßig ausgetauscht werden muss.

US 2004/054286 A1 offenbart eine Haltevorrichtung für eine Hohlnadel zum Durchstoßen des Deckels eines Blutentnahmeröhrchens, umfassend ein erstes, an einer automatisiert bewegbaren Basisplatte eines automatischen Analysegeräts lösbar befestigbares Halteelement und ein zweites, mit dem ersten Halteelement verbundenes Halteelement. Weitere Haltevorrichtungen werden in US 2007/053797 A1 und WO 2010/082080 A1 offenbart.

Es ist daher Aufgabe der Erfindung, eine Haltevorrichtung für eine Hohlnadel zum Durchstoßen des Deckels eines Probenröhrchens bereit zu stellen, die einen besonders stabilen Halt der Hohlnadel bietet und gleichzeitig einen einfachen Austausch der Hohlnadel im Verschleißfall ermöglicht.

Diese Aufgabe wird erfindungsgemäß gelöst, indem die Haltevorrichtung ein erstes, an einer automatisiert bewegbaren Basisplatte eines automatischen Analysegeräts lösbar befestigbares Halteelement und ein zweites, mit dem ersten Halteelement lösbar verbundenes Halteelement umfasst, wobei zwischen den Halteelementen mindestens eine Lagerbuchse fixiert ist, in der die Hohlnadel gelagert ist, wobei das erste Halteelement einen Hohlraum umfasst, der einen an der Hohlnadel befestigten Anschlag derart umschließt, dass die Bewegung der Hohlnadel in der mindestens einen Lagerbuchse begrenzt wird.

Dies bewirkt eine gute Lagerung und damit einen stabilen Halt und eine präzise Positionierung der Hohlnadel in radialer Richtung, was für die Durchstoßgenauigkeit der Hohlnadel erforderlich ist. Ein weiterer Vorteil besteht in der leichten Austauschbarkeit der Hohlnadel und darin, dass nach dem Austausch der Nadel nicht neu justiert werden muss. Eine lösbare Verbindung der Haltevorrichtung an einer automatisiert bewegbaren Basisplatte des automatischen Analysegeräts sorgt hier für eine stabile Positionierung, so dass die neue Hohlnadel ebenso genau positioniert ist wie die bisherige Hohlnadel. Durch Lösen der Verbindung kann eine verschlissene Hohlnadel mitsamt Haltevorrichtung entnommen und eine neue Hohlnadel mit Haltevorrichtung eingesetzt werden. Eine Verbindung der neuen Haltevorrichtung fixiert die neue Hohlnadel in der mindestens einen Lagerbuchse.

Die Lagerbuchse hat den weiteren Vorteil, dass eine axiale Bewegung der Hohlnadel möglich ist. Dadurch wird ermöglicht, einen unvorhergesehenen Kontakt der Nadel, einen sogenannten Crash, z.B. mit der Innenwand des Blutentnahmeröhrchens zu erkennen. Bei einem Crash weicht die Nadel im Hohlraum in axialer Richtung aus, was von entsprechenden Detektoren erkannt werden kann. Diese Ausweichbewegung sollte jedoch begrenzt werden, da andernfalls die Positionierung und Stabilität der Hohlnadel gefährdet wird. Andererseits muss bei einem erwünschten Kontakt, nämlich beim Durchstoßen des Verschlusses des Blutentnahmeröhrchens eine ausreichende Kraftausübung in axialer Richtung ermöglicht werden. Hierzu weist die Hohlnadel einen Anschlag auf, der sich vorteilhafterweise in radialer Richtung erstreckt. Das erste Halteelement weist einen Hohlraum auf, der den Anschlag umschließt, dabei jedoch nicht fixiert, sondern noch eine axiale Bewegung erlaubt, die lediglich hinsichtlich ihrer Weite begrenzt wird.

Vorteilhafterweise ist der Hohlnadel ein Rückstellelement zugeordnet. Hierdurch wird gewährleistet, dass trotz der Beweglichkeit der Hohlnadel in axialer Richtung eine vorgegebene Standardposition existiert, in die die Hohlnadel ohne Krafteinwirkung von außen selbständig zurückkehrt, z.B. nach einer Ausweichbewegung der Hohlnadel in Folge eines Crashs. Die vorgegebene Standardposition vereinfacht es auch, einen derartigen Crash mittels eines entsprechenden Crashsensors zu detektieren.

Das Rückstellelement ist vorteilhafterweise eine zwischen Anschlag und erstem Halteelement befestigte Feder. Im kraftfreien Zustand, d.h. ohne Kontakt der Nadel mit einem Widerstand ist dadurch in technisch besonders einfacher Weise eine Standardposition definiert.

In weiterer vorteilhafter Ausgestaltung umfasst der Anschlag einen Bolzen, der mit einem gelagerten Hebel verbunden ist. Der Hebel ist dabei vorteilhafterweise so angeordnet und ausgebildet, dass er von außerhalb der Haltevorrichtung betätigt werden kann. Dadurch ist es möglich, durch eine entsprechende Betätigungsvorrichtung für den Hebel am automatischen Analysegerät die Position der Nadel in axialer Richtung gezielt einzustellen. Insbesondere wird beim Durchstoßen des Verschlusses eines Blutentnahmeröhrchens der Hebel automatisiert betätigt und die Nadel mit ihrem Anschlag in die maximale Ausweichposition gebracht, so dass sie im Hohlraum anliegt, beim Durchstoßen keine weitere Bewegung mehr vollführt und dadurch stabilisiert wird.

Vorteilhafterweise ist mit dem Bolzen ein Element einer Positionsmesseinrichtung verbunden. Das Element kann je nach Art der Positionsmesseinrichtung variieren, z.B. kann ein Mikroschalter vorgesehen sein oder ein Reflektionselement für eine Lichtschranke. In allen Fällen kann dabei die Relativbewegung des Bolzens zur Haltevorrichtung ermittelt werden, so dass die Detektion eines Crashs in besonders einfacher Weise ermöglicht wird.

Das erste Halteelement einer beschriebene Haltevorrichtung ist vorteilhafterweise mit einer automatisiert bewegbaren Basisplatte des automatischen Analysegeräts verbunden.

Vorteilhafterweise umfasst die Verbindung des ersten Halteelements mit der Basisplatte ein Gelenk, welches in einer ersten Position mittels Formschluss ein Lösen des ersten Halteelements verhindert und in einer zweiten Position ein Lösen des ersten Halteelements erlaubt. Eine derartige Ausführung vereinigt in besonders einfacher Weise das Erfordernis der stabilen Positionierung und leichten Entnehmbarkeit der Hohlnadel. In der ersten Position ist durch den Formschluss ein Lösen ausgeschlossen, so dass eine stabile Positionierung gewährleistet ist. Wird das Gelenk manuell in die zweite Position gebracht, kann die Haltevorrichtung mit der Nadel einfach entnommen werden.

In weiterer vorteilhafter Ausgestaltung umfasst die Verbindung ein Verbindungselement, welches das erste Halteelement formschlüssig mit der Basisplatte verbindet und welches unter Krafteinwirkung wiederverschließbar öffnet. Das Verbindungselement dient somit dazu, die Verbindung des ersten Halteelements mit der Basisplatte in der ersten Position des Gelenks zu fixieren. Erst durch entsprechende Krafteinwirkung auf das Verbindungselement kann dann das Gelenk in die zweite Position bewegt und die Haltevorrichtung von der Basisplatte entnommen werden. Eine neue Haltevorrichtung mit neuer Hohlnadel wird wieder eingesetzt und das Gelenk in die erste Position gedreht. Auf Grund der Wiederverschließbarkeit des Verbindungselements wird die Haltevorrichtung dann auf einfache Weise wieder fixiert.

Als Verbindungselement sind hier verschiedene wiederverschließbare Konstruktionen denkbar. Ein besonders stabiler Halt mit einer genauen Positionierung wird vorteilhafterweise dadurch erreicht, dass das Verbindungselement aus einer Ruheposition selbstrückstellend verschiebbare Rollen aufweist. Diese sollten so angeordnet sein, dass sie sich bei einer Krafteinwirkung durch Ziehen an der Haltevorrichtung verschieben und somit eine Bewegung des Gelenks in die zweite Position und Entnahme der Haltevorrichtung erlauben.

Ein weiterer Gegenstand der vorliegenden Erfindung ist ein automatisches Analysegerät mit einer Pipettiervorrichtung umfassend eine Hohlnadel, wobei die Pipettiervorrichtung eine beschriebene Haltevorrichtung für die Hohlnadel umfasst.

Die mit der Erfindung erzielten Vorteile bestehen insbesondere darin, dass durch die beschriebene lösbar verbundene Lagerung der Hohlnadel in einer Haltevorrichtung einerseits ein stabiler Halt und eine hohe Positionierungsgenauigkeit erreicht werden und andererseits eine leichte Austauschbarkeit einer verschlissenen Hohlnadel ermöglicht wird. Die Konstruktion erleichtert somit die automatisierte Entnahme von Probenflüssigkeiten aus verschlossenen Probenbehältern in einem automatischen Analysegerät.

Die Erfindung wird anhand einer Zeichnung näher erläutert. Darin zeigen:
- FIG 1: erstes und zweites Halteelement einer Haltevorrichtung mit eingesetzter Hohlnadel in voneinander gelöster Position,
- FIG 2: das erste Halteelement vorderseitig mit Darstellung des Hohlraums,
- FIG 3: das erste Halteelement rückseitig mit dem Hebel zur Betätigung der Hohlnadelposition,
- FIG 4: die Haltevorrichtung mit Basisplatte in verbundenem Zustand,
- FIG 5: die Haltevorrichtung mit gelöstem Gelenk, und
- FIG 6: ausschnittsweise das Verbindungselement der Haltevorrichtung mit gelöstem Gelenk.

Gleiche Teile sind in allen Figuren mit denselben Bezugszeichen versehen.

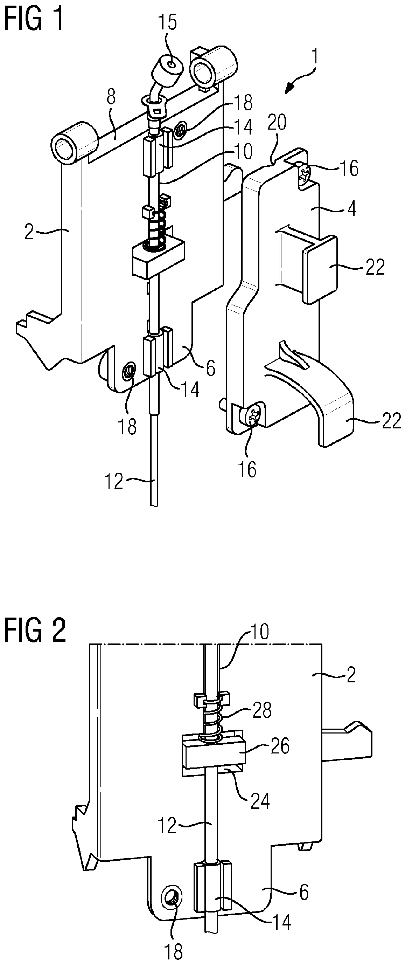

Die FIG 1 zeigt die Haltevorrichtung 1 mit erstem Halteelement 2 und zweitem Halteelement 4. Das erste Halteelement 2 zeigt dabei eine im Wesentlichen rechteckige, flache Grundform mit einem Fortsatz 6, der sich in die Richtung einer nicht näher gezeigten Aufnahmeposition für Blutentnahmeröhrchen erstreckt. Von dem Fortsatz 6 bis zur ihm gegenüberliegenden Kante 8 des ersten Halteelements 2 erstreckt sich mittig eine Nut 10, in der eine zylinderförmige Hohlnadel 12 geführt ist. Die im Folgenden verwendeten Begriffe axial und radial beziehen sich stets auf die Zylinderform der Hohlnadel.

Die Hohlnadel 12 ist in zwei Lagerbuchsen 14 gelagert, die im Bereich der Kante 8 und auf dem Fortsatz 6 angeordnet sind. Die Hohlnadel 12 erstreckt sich über die Nut 10 hinaus. Auf der Seite der Kante 8 weist sie einen Anschluss 15 für einen Schlauch zur Beaufschlagung des Hohlraums der Hohlnadel 12 mittels Druck oder Unterdruck auf. Auf der Seite des Fortsatzes 6 erstreckt sich die Hohlnadel 12 bis zu ihrer nicht gezeigten Spitze zum Durchstoßen des Verschlusses eines Blutentnahmeröhrchens.

Das zweite Halteelement 4 weist Bohrungen auf, in die Schrauben 16 eingebracht werden können. Mittels entsprechender Gewindebohrungen 18 im ersten Halteelement 2 kann das zweite Halteelement 4 am ersten Halteelement fixiert werden. Das zweite Halteelement 4 ist dabei so ausgestaltet, dass es sich über die gesamte Nut 10 des ersten Halteelements 2 erstreckt und weist eine deckungsgleiche Nut 20 zur Nut 10 am ersten Halteelement 2 auf. Im verbundenen Zustand wird die Hohlnadel 12 somit zwischen den Halteelementen 2, 4 in den Lagerbuchsen 14 fixiert und ist nur noch in axialer Richtung bewegbar.

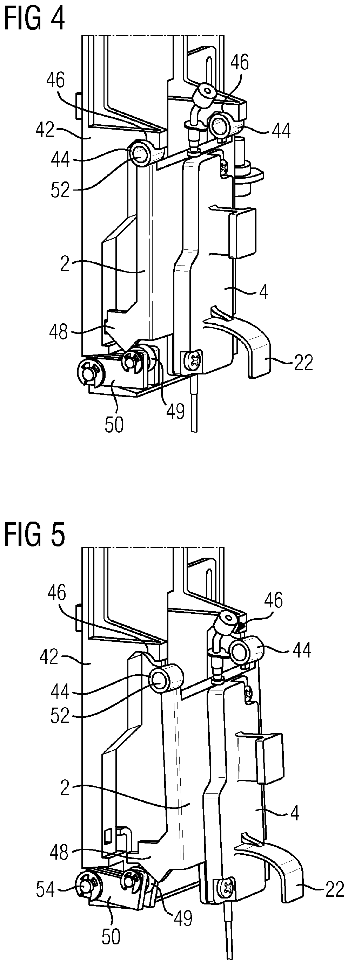

Das zweite Halteelement weist Griffe 22 zur leichten Entnahme der Haltevorrichtung 1 auf. Der Entnahmevorgang wird in den FIG 4 bis 6 erläutert. Die übrigen in FIG 1 bereits gezeigten Merkmale werden ebenfalls im Folgenden näher erläutert.

FIG 2 zeigt vergrößert den unteren Teil des ersten Halteelements 2. Das erste Halteelement 2 weist einen quaderförmigen Hohlraum 24 auf, der die Nut 10 unterbricht. An der Hohlnadel 12 ist ein ebenfalls quaderförmiger Anschlag 26 fest angeordnet, der in radialer Ebene den Hohlraum 24 vollständig ausfüllt, in axialer Richtung jedoch eine geringere Höhe als der Hohlraum 24 hat. Die axiale Bewegung der Hohlnadel 12 in der Nut 10 wird damit auf den Höhenunterschied zwischen Anschlag 26 und Hohlraum 24 begrenzt.

Eine Feder 28 verbindet den Anschlag 26 und das erste Halteelement 2, so dass die Position der Hohlnadel 12 in axialer Richtung selbstrückstellend ist. FIG 1 zeigt hierbei die Ruheposition, d.h. ohne Krafteinwirkung, während FIG 2 die Position in einem Crashzustand, d.h. mit Krafteinwirkung auf die Nadelspitze zeigt.

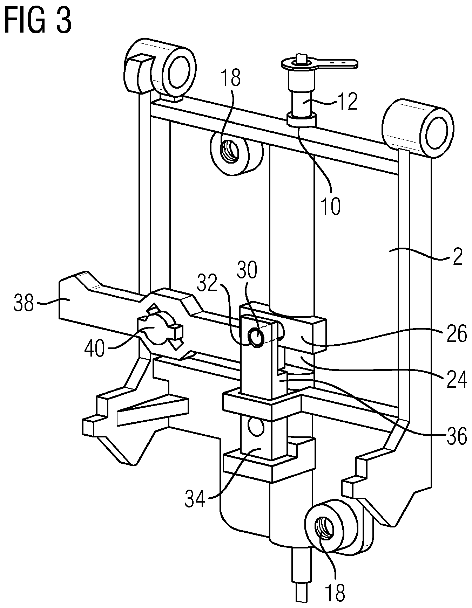

FIG 3 zeigt gegenüber FIG 2 die Rückseite des oberen Teils des ersten Halteelements 2. Am Anschlag 26 ist rückseitig ein Bolzen 30 befestigt, der in einer Bohrung 32 eines in axialer Richtung bewegbaren Quaders 34 gelagert ist. Der Quader 34 weist einen der Vorderseite zugewandten Absatz 36 auf.

Zwischen dem Absatz 36 und dem Bolzen 30 ist ein Zwischenraum vorgesehen, in welchen ein Ende eines Hebels 38 eingreift, der mit einer Achse 40 am ersten Halteelement 2 gelagert ist, und dessen freies Ende über den Rand des ersten Halteelements 2 hinaus ragt. Am freien Ende des Hebels 38 kann somit von außerhalb der Haltevorrichtung 1 die axiale Lage der Hohlnadel 12 beeinflusst werden. Dies erfolgt beispielsweise beim Durchstoßen eines Verschlusses eines Blutentnahmeröhrchens. Durch eine nicht näher gezeigte Vorrichtung des automatischen Analysegeräts wird der Hebel 38 betätigt, so dass die Hohlnadel 12 in die in FIG 2 gezeigte Position gebracht wird. Dadurch wird die Hohlnadel 12 beim Durchstoßen stabilisiert.

Am Quader 34 ist ein nicht näher beschriebenes Element einer Positionsmessvorrichtung angeordnet. Dies kann beispielsweise ein Reflektor für eine Lichtschranke, ein Mikroschalter oder Ähnliches sein. Hierdurch kann die Relativposition der Hohlnadel 12 zum Halteelement 2 ermittelt werden und ein Crash zuverlässig detektiert werden.

FIG 4 zeigt die mittels Schrauben 16 verbundenen Halteelemente 2, 4 aus FIG 1, die als Haltevorrichtung 1 an einer Basisplatte 42 angeordnet sind. Die Basisplatte 42 ist mit einer nicht dargestellten elektrischen oder hydraulischen Motorik verbunden und kann daher von der Steuereinheit des automatischen Analysegeräts im Rahmen der Analyse automatisiert bewegt werden.

Die Befestigung der Haltevorrichtung 1 mittels des ersten Halteelements 2 an der Basisplatte 42 erfolgt über Hohlzylinder 44, die beiderseits am Rand der Kante 8 des ersten Halteelements 2 fest angeordnet sind. Diese greifen in trapezförmig ausgeschnittene, den Hohlzylindern 44 angeformte Lager 46 an der Basisplatte 42 ein. Durch die Trapezform der Lager 46 in Verbindung mit der Hohlzylinderform wird eine besonders ortsgenaue Lagerung ermöglicht. An seinem unteren Teil weist das erste Halteelement 2 der Basisplatte 42 zugewandte Fortsätze 48 auf, die zusammen mit selbstrückstellenden, verschiebbaren Rollen 49 ein Verbindungselement 50 bilden, welches das erste Halteelement 2 formschlüssig mit der Basisplatte 42 verbindet und unter Krafteinwirkung wiederverschließbar öffnet. Auch hier sorgt die runde Form der Rollen 49 in Verbindung mit einer keilförmig eingeschnittenen Form des Fortsatzes 48 für eine genaue automatische Justierung. In der in FIG 4 gezeigten ersten Position des aus Hohlzylindern 44 und Lagern 46 gebildeten Gelenks 52 ist das Halteelement 2 formschlüssig mit der Basisplatte 42 verbunden.

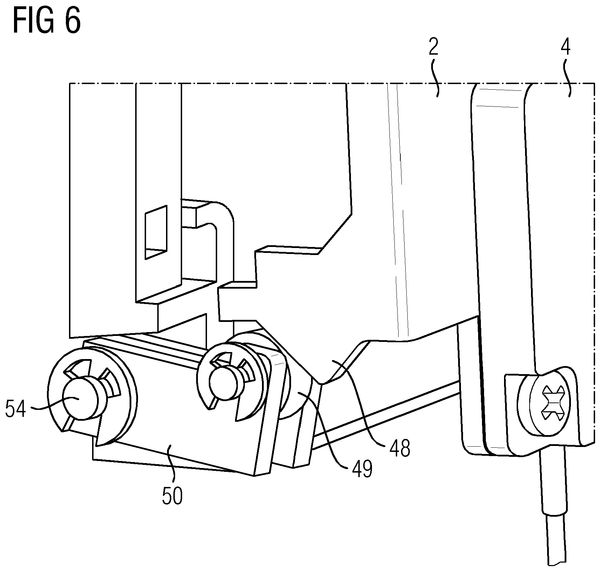

Das Lösen des Halteelements 2 zum Austausch der Hohlnadel 12 ist in den FIG 5 und 6 gezeigt. Durch manuellen Zug am Griff 22 verschieben sich die mittels einer Achse 54 selbstrückstellend gelagerten Rollen 49. Dadurch wird das Halteelement 2 im Verbindungselement 50 gelöst und im Gelenk 52 ausgedreht. Durch den Entfall des Formschlusses im Verbindungselement 50 können die Hohlzylinder 44 aus den Lagern 46 gelöst werden. Bei ausreichendem Zug kann die Haltevorrichtung 1 somit entnommen werden, siehe FIG 5.

FIG 6 zeigt vergrößert eine in der Achse 54 gelagerte, selbstrückstellende Rolle 49.

Dem Benutzer wird eine Austauschnadel direkt in einer neuen Haltevorrichtung 1 geliefert. Der Einbau erfolgt in umgekehrter Reihenfolge. Somit ist ein einfacher Austausch einer verschlissenen Hohlnadel 12 möglich, und es bleibt eine genaue Positionierung gewährleistet.

### BEZUGSZEICHENLISTE

- 1: Haltevorrichtung
- 2: erstes Halteelement
- 4: zweites Halteelement
- 6: Fortsatz
- 8: Kante
- 10: Nut
- 12: Hohlnadel
- 14: Lagerbuchse
- 15: Anschluss
- 16: Schraube
- 18: Gewindebohrung
- 20: Nut
- 22: Griff
- 24: Hohlraum
- 26: Anschlag
- 28: Feder
- 30: Bolzen
- 32: Bohrung
- 34: Quader
- 36: Absatz
- 38: Hebel
- 40: Achse
- 42: Basisplatte
- 44: Hohlzylinder
- 46: Lager
- 48: Fortsatz
- 49: Rollen
- 50: Verbindungselement
- 52: Gelenk
- 54: Achse

## Patentansprüche

1. Haltevorrichtung (1) für eine Hohlnadel (12) zum Durchstoßen des Deckels eines Blutentnahmeröhrchens, umfassend ein erstes, an einer automatisiert bewegbaren Basisplatte (42) eines automatischen Analysegeräts lösbar befestigbares Halteelement (2) und ein zweites, mit dem ersten Halteelement (2) verbundenes Halteelement (4), **dadurch gekennzeichnet, dass** zwischen den Halteelementen (2, 4) mindestens eine Lagerbuchse (14) fixiert ist, in der die Hohlnadel (12) gelagert ist, wobei das erste Halteelement (2) einen Hohlraum (24) umfasst, der einen an der Hohlnadel (12) befestigten Anschlag (26) derart umschließt, dass die Bewegung der Hohlnadel (12) in der mindestens einen Lagerbuchse (14) begrenzt wird.

2. Haltevorrichtung (1) nach Anspruch 1, bei der der Hohlnadel (12) ein Rückstellelement (28) zugeordnet ist.

3. Haltevorrichtung (1) nach Anspruch 2, bei der das Rückstellelement (28) eine zwischen Anschlag (26) und erstem Halteelement (2) befestigte Feder (28) ist.

4. Haltevorrichtung (1) nach einem der Ansprüche 2 oder 3, bei der der Anschlag (26) einen Bolzen (30) umfasst, der mit einem gelagerten Hebel (38) verbunden ist.

5. Haltevorrichtung (1) nach Anspruch 4, bei der mit dem Bolzen (30) ein Element einer Positionsmesseinrichtung verbunden ist.

6. Haltevorrichtung (1) nach einem der vorhergehenden Ansprüche, deren erstes Halteelement (2) mit einer automatisiert bewegbaren Basisplatte (42) des automatischen Analysegeräts lösbar verbunden ist.

7. Haltevorrichtung (1) nach einem der vorhergehenden Ansprüche, bei der die Verbindung des ersten Halteelements (2) mit der Basisplatte (42) ein Gelenk (52) umfasst, welches in einer ersten Position mittels Formschluss ein Lösen des ersten Halteelements (2) verhindert und in einer zweiten Position ein Lösen des ersten Halteelements (2) erlaubt.

8. Haltevorrichtung (1) nach Anspruch 7, bei der die Verbindung ein Verbindungselement (50) umfasst, welches das erste Halteelement (2) formschlüssig mit der Basisplatte (42) verbindet und welches unter Krafteinwirkung wiederverschließbar öffnet.

9. Haltevorrichtung (1) nach Anspruch 8, bei der das Verbindungselement (50) aus einer Ruheposition selbstrückstellend verschiebbare Rollen (49) aufweist.

10. Automatisches Analysegerät mit einer Pipettiervorrichtung umfassend eine Hohlnadel, **dadurch gekennzeichnet, dass** die Pipettiervorrichtung eine Haltevorrichtung (1) für die Hohlnadel nach einem der vorhergehenden Ansprüche umfasst.

## Claims

1. Retaining device (1) for a hollow needle (12) for puncturing the lid of a blood sampling tube, comprising a first retaining element (2), which can be secured releasably on a base plate (42) of an automatic analysis apparatus, which base plate (42) is movable in an automated manner, and a second retaining element (4), which is connected to the first retaining element (2), **characterized in that** at least one bearing bushing (14) is provided, which is fixed between the retaining elements (2, 4) and in which the hollow needle (12) is mounted, wherein the first retaining element (2) comprises a hollow space (24) in which an abutment (26), secured on the hollow needle (12), is enclosed in such a way that the movement of the hollow needle (12) in the at least one bearing bushing (14) is limited.

2. Retaining device (1) according to Claim 1, in which a restoring element (28) is assigned to the hollow needle (12).

3. Retaining device (1) according to Claim 2, in which the restoring element (28) is a spring (28) secured between abutment (26) and first retaining element (2).

4. Retaining device (1) according to one of Claims 2 and 3, in which the abutment (26) comprises a bolt (30), which is connected to a lever (38) mounted in a bearing.

5. Retaining device (1) according to Claim 4, in which an element of a position-measuring device is connected to the bolt (30) .

6. Retaining device (1) according to one of the preceding claims, in which the first retaining element (2) is connected releasably to a base plate (42) of the automatic analysis apparatus, which base plate (42) is movable in an automated manner.

7. Retaining device (1) according to one of the preceding claims, in which the connection of the first retaining element (2) to the base plate (42) comprises a joint (52) which, in a first position, prevents release of the first retaining element (2), by means of a form fit, and, in a second position, permits release of the first retaining element (2).

8. Retaining device (1) according to Claim 7, in which the connection comprises a connection element (50), which connects the first retaining element (2) to the base plate (42) with a form fit and which, under the effect of a force, opens in a manner allowing it to reclose.

9. Retaining device (1) according to Claim 8, in which the connection element (50) has rollers (49), which are movable from a rest position in a self-restoring manner.

10. Automatic analysis apparatus with a pipetting device comprising a hollow needle, **characterized in that** the pipetting device comprises a retaining device (1) for the hollow needle according to one of the preceding claims.

## Revendications

1. Dispositif (1) de retenue d'une aiguille (12) creuse pour perforer le couvercle d'un tube de prélèvement de sang, comprenant un premier élément (2) de retenue, pouvant être fixé de manière amovible à une plaque (42) de base, pouvant être déplacée d'une manière automatisée, d'un appareil d'analyse automatique, et un deuxième élément (4) de retenue relié au premier élément (2) de retenue, **caractérisé en ce qu'**entre les éléments (2, 4) de retenue est immobilisé au moins un coussinet (14), dans lequel l'aiguille (12) creuse est montée, le première élément (2) de retenue comprenant une cavité (24), qui entoure une butée (26) fixée à l'aiguille (12) creuse, de manière à limiter le déplacement de l'aiguille (12) creuse dans le au moins un coussinet (14).

2. Dispositif (1) de retenue suivant la revendication 1, dans lequel un élément (28) de rappel est associé à l'aiguille (12) creuse.

3. Dispositif (1) de retenue suivant la revendication 2, dans lequel l'élément (28) de rappel est un ressort (28) fixé entre la butée (26) et le premier élément (2) de retenue.

4. Dispositif (1) de retenue suivant l'une des revendications 2 ou 3, dans lequel la butée (26) comprend un axe (30), qui est relié à un levier (38) supporté.

5. Dispositif (1) de retenue suivant la revendication 4, dans lequel un élément d'un dispositif de mesure de la position est relié à l'axe (30).

6. Dispositif (1) de retenue suivant l'une des revendications précédentes, dont le premier élément (2) de retenue est relié de manière amovible à une plaque (42) de base, pouvant être déplacée de manière automatisée, de l'appareil d'analyse automatique.

7. Dispositif (1) de retenue suivant l'une des revendications précédentes, dans lequel la liaison du premier élément (2) de retenue à la plaque (42) de base comprend une articulation (52), qui, dans une première position empêche, au moyen d'une complémentarité de forme, le premier élément (2) de retenue de se détacher et, dans une deuxième position, permet au premier élément (2) de retenue de se détacher.

8. Dispositif (1) de retenue suivant la revendication 7, dans lequel la liaison comprend un élément (50) de liaison, qui relie le premier élément (2) de retenue à complémentarité de forme à la plaque (42) de base et qui s'ouvre, avec possibilité de se refermer, sous l'effet d'une force.

9. Dispositif (1) de retenue suivant la revendication 8, dans lequel l'élément (50) de liaison a des galets (49) pouvant coulisser avec rappel automatique depuis une position de repos.

10. Appareil d'analyse automatique comprenant un dispositif de pipetage, comprenant une aiguille creuse, **caractérisé en ce que** le dispositif de pipetage comprend un dispositif (1) de retenue de l'aiguille creuse suivant l'une des revendications précédentes.
